# FASCICULE DE BREVET EUROPEEN

(11) **EP 3 686 059 B1**
(45) Date de publication et mention de la délivrance du brevet: **18.08.2021**
(21) Numéro de dépôt: 20152310.7
(22) Date de dépôt: 16.01.2020
(51) Int. Cl.: B60R 5/04

(54) **SYSTÈME DE RECOUVREMENT D'UN COMPARTIMENT À BAGAGES DE VÉHICULE AUTOMOBILE**
ABDECKSYSTEM EINES KOFFERRAUMFACHS EINES KRAFTFAHRZEUGS
SYSTEM FOR COVERING A LUGGAGE COMPARTMENT OF A MOTOR VEHICLE

(30) Priorité: 25.01.2019 FR 1900678
(43) Date de publication de la demande: 29.07.2020
(73) Titulaire: TREVES PRODUCTS, SERVICES & INNOVATION, 75008 Paris (FR)
(72) Inventeur: LECOMTE, Alicia, 51220 Villers-Franqueux (FR); GUENAMANT, Nicolas, 08310 Machault (FR)
(74) Mandataire: Sayettat, Julien Christian

(56) Documents cités:
- WO-A1-2018/162844
- FR-A1- 3 071 792

## Description

L'invention concerne un système de recouvrement d'un compartiment à bagages de véhicule automobile.

Il est connu de réaliser un système de recouvrement d'un compartiment à bagages de véhicule automobile, ledit système comprenant :
- deux garnitures latérales dudit compartiment, lesdites garnitures étant pourvues chacune d'un rail de guidage,
- un panneau fixe de recouvrement de la partie avant dudit compartiment,
- un volet monté coulissant sur ledit rail entre :
   ∘ une position de recouvrement dudit compartiment où il est disposé en arrière et dans le prolongement dudit panneau,
   ∘ et une position d'accès audit compartiment où ledit volet est déplacé manuellement de manière à libérer un accès audit compartiment.

Il peut être envisagé que le volet en position d'accès soit manuellement rehaussé et avancé de manière à venir en recouvrement du panneau tout présentant sensiblement la même assiette - c'est à dire que ledit volet ne subit sensiblement pas de rotation - dans les deux positions. Un tel système de recouvrement d'un compartiment à bagages de véhicule est connu du document WO 2008/162844 A1.

On note ici que le fait que le volet vienne en position d'accès rehaussée permet de ne pas interférer avec le volume du compartiment à bagages.

Cependant, avec un tel agencement, se pose le problème d'éviter une « mise en crabe » du volet lors de son actionnement, c'est à dire une situation où un bord latéral dudit volet est décalé longitudinalement par rapport à l'autre bord, ce qui peut conduire à un blocage dudit volet nuisible au bon fonctionnement du système.

L'invention a pour but de pallier cet inconvénient.

A cet effet, l'invention selon la revendication 1 propose un système de recouvrement d'un compartiment à bagages de véhicule automobile, ledit système comprenant :
- deux garnitures latérales dudit compartiment, lesdites garnitures étant pourvues chacune d'un rail de guidage,
- un panneau fixe de recouvrement de la partie avant dudit compartiment,
- un volet monté coulissant sur ledit rail entre :
   ∘ une position de recouvrement dudit compartiment où il est disposé en arrière et dans le prolongement dudit panneau,
   ∘ et une position d'accès audit compartiment où ledit volet est déplacé manuellement de manière à libérer un accès audit compartiment,
ledit système présentant en outre les caractéristiques suivantes :
- ledit volet en position d'accès est rehaussé et avancé de manière à venir en recouvrement dudit panneau en présentant sensiblement la même assiette dans les deux positions,
- il comprend en outre deux navettes rigides montées par leurs extrémités avant et arrière en coulissement sur chacun desdits rails, lesdites extrémités étant pourvues de moyens d'emboitement dudit volet,
- ledit volet est pourvu, en extrémités de chacun de ses bords latéraux, de deux saillies transversales respectives reçues en emboitement dans lesdits moyens.

Dans cette description, les termes de positionnement dans l'espace (longitudinal, transversal, latéral, avant, arrière, horizontal, vertical, haut, bas,...) sont pris en référence au système en place dans le véhicule.

Avec l'agencement préconisé, mettant en œuvre deux navettes, on supprime le risque d'une « mise en crabe » du volet.

D'autres particularités et avantages de l'invention apparaîtront dans la description qui suit, faite en référence aux figures jointes, dans lesquelles :

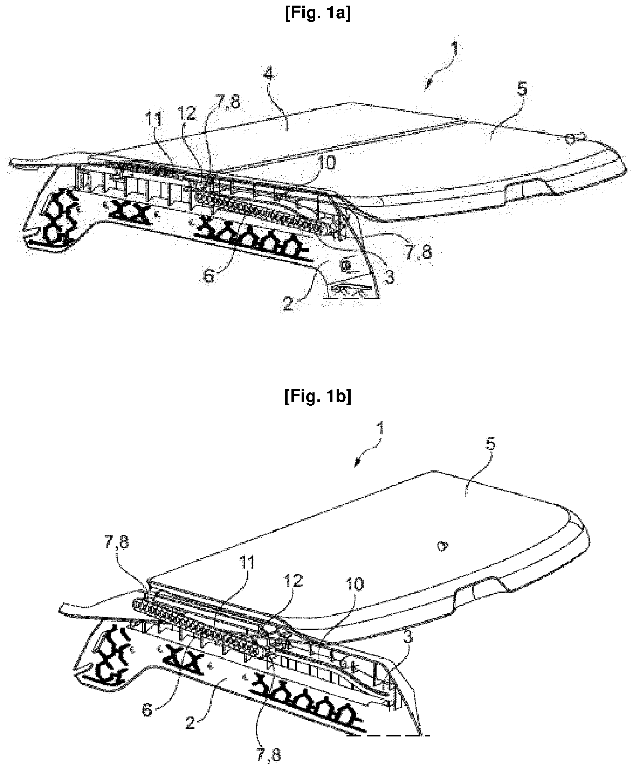

- les figures 1 sont des vues schématiques en perspective d'un système selon une réalisation,
   [Fig. 1a] le volet étant disposé en position de recouvrement
   [Fig. 1b] le volet étant disposé en position d'accès,

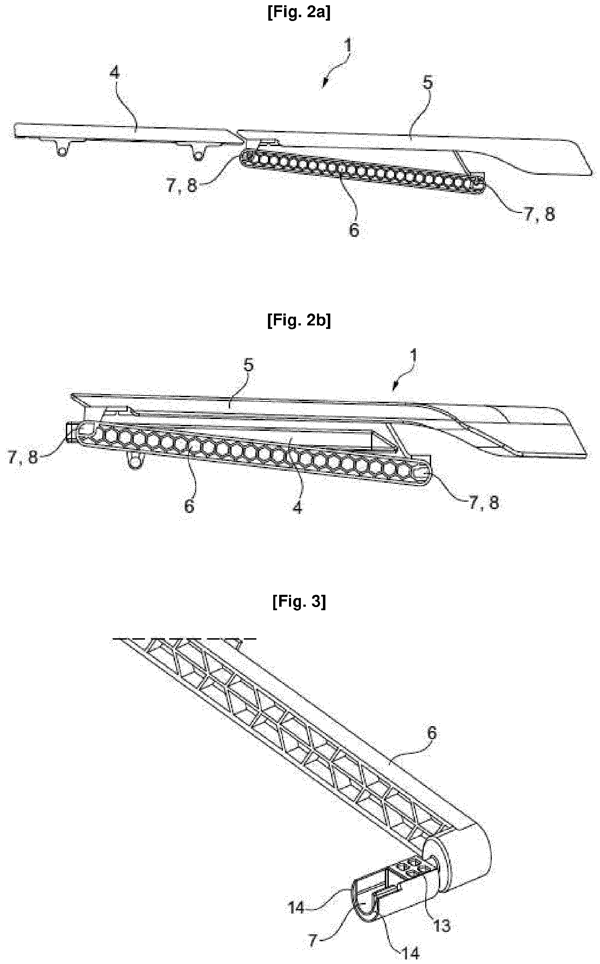

- les figures 2 sont des vues schématiques latérales partielles du système des figures 1,
   [Fig. 2a] le volet étant disposé en position de recouvrement
   [Fig. 2b] le volet étant disposé en position d'accès,
   [Fig. 3] est une vue schématique en perspective partielle de détail du système des figures précédentes.

En référence aux figures, on décrit un système 1 de recouvrement d'un compartiment à bagages de véhicule automobile, ledit système comprenant :
- deux garnitures latérales 2 dudit compartiment, lesdites garnitures étant pourvues chacune d'un rail 3 de guidage,
- un panneau fixe 4 de recouvrement de la partie avant dudit compartiment,
- un volet 5 monté coulissant sur ledit rail entre :
   ∘ une position de recouvrement dudit compartiment où il est disposé en arrière et dans le prolongement dudit panneau,
   ∘ et une position d'accès audit compartiment où ledit volet est déplacé manuellement de manière à libérer un accès audit compartiment,
ledit système présentant en outre les caractéristiques suivantes :
- ledit volet en position d'accès est rehaussé et avancé de manière à venir en recouvrement dudit panneau en présentant sensiblement la même assiette dans les deux positions,
- il comprend en outre deux navettes 6 rigides montées par leurs extrémités avant et arrière en coulissement sur chacun desdits rails, lesdites extrémités étant pourvues de moyens d'emboitement 7 dudit volet,
- ledit volet est pourvu, en extrémités de chacun de ses bords latéraux, de deux saillies 8 transversales respectives reçues en emboitement dans lesdits moyens.

Selon la réalisation représentée, les rails 3 en vue latérale présentent un plateau arrière bas 10 et un plateau avant haut 11, lesdits plateaux étant séparés par une piste d'accès 12 inclinée par rapport à l'horizontale.

Selon la réalisation représentée :
- les rails 3 sont sous forme d'une fente réalisée dans les garnitures 2,
- les navettes 6 sont montées en envers desdites garnitures,
- un moyen d'emboitement 7 est solidaire d'une navette 6 par l'intermédiaire d'une partie de coulissement 13 insérée dans ladite fente.

Selon la réalisation représentée, la partie de coulissement 13 et le moyen d'emboitement 7 font partie d'une même pièce monobloc emboitée en extrémité de la navette 6.

Selon la réalisation représentée, un moyen d'emboitement 7 présente une section générale en oméga, permettant un emboitement en force des saillies 8 transversales qui réalisent un écartement temporaire des branches 14 de l'oméga qui reprennent ensuite leur position d'origine par retour élastique.

## Revendications

1. Système (1) de recouvrement d'un compartiment à bagages de véhicule automobile, ledit système comprenant :
• deux garnitures latérales (2) dudit compartiment, lesdites garnitures étant pourvues chacune d'un rail (3) de guidage,
• un panneau fixe (4) de recouvrement de la partie avant dudit compartiment, et
• un volet (5) monté coulissant sur ledit rail entre :
∘ une position de recouvrement dudit compartiment où il est disposé en arrière et dans le prolongement dudit panneau,
∘ et une position d'accès audit compartiment où ledit volet est déplacé manuellement de manière à libérer un accès audit compartiment,
• ledit volet en position d'accès étant rehaussé et avancé de manière à venir en recouvrement dudit panneau en présentant sensiblement la même assiette dans les deux positions,
ledit système étant **caractérisé en ce que**:
• ledit système comprend en outre deux navettes (6) rigides montées par leurs extrémités avant et arrière en coulissement sur chacun desdits rails, lesdites extrémités étant pourvues de moyens d'emboitement (7) dudit volet,
• ledit volet étant pourvu, en extrémités de chacun de ses bords latéraux, de deux saillies (8) transversales respectives reçues en emboitement dans lesdits moyens.

2. Système (1) selon la revendication 1, **caractérisé en ce que** les rails (3) en vue latérale présentent un plateau arrière bas (10) et un plateau avant haut (11), lesdits plateaux étant séparés par une piste d'accès (12) inclinée par rapport à l'horizontale.

3. Système (1) selon l'une des revendications 1 ou 2, **caractérisé en ce que** :
• les rails (3) sont sous forme d'une fente réalisée dans les garnitures (2),
• les navettes (6) sont montées en envers desdites garnitures,
• un moyen d'emboitement (7) est solidaire d'une navette (6) par l'intermédiaire d'une partie de coulissement (13) insérée dans ladite fente.

4. Système (1) selon la revendication 3, **caractérisé en ce que** la partie de coulissement (13) et le moyen d'emboitement (7) font partie d'une même pièce monobloc emboitée en extrémité de la navette (6).

## Patentansprüche

1. System (1) zur Abdeckung eines Kofferraumfachs eines Kraftfahrzeugs, wobei das System umfasst:
- zwei Seitenverkleidungen (2) des Fachs, wobei die Verkleidungen jeweils mit einer Führungsschiene (3) versehen sind,
- eine feste Abdeckplatte (4) für den vorderen Teil des Fachs, und
- eine Klappe (5), die in der Schiene verschiebbar angebracht ist zwischen:
-- einer Stellung zur Abdeckung des Fachs, in der sie hinter und in der Verlängerung der Platte angeordnet ist,
-- und einer Stellung für den Zugang zum Fach, in der die Klappe manuell verlagert wird, um einen Zugang zum Fach freizugeben,
- wobei die Klappe in der Zugangsstellung angehoben und nach vorne bewegt wird, um mit der Platte in Abdeckung zu gehen, wobei sie in den beiden Stellungen im Wesentlichen die gleiche Lage aufweist,
wobei das System **dadurch gekennzeichnet ist, dass**:
- das System weiter zwei starre Schlitten (6) umfasst, die mit ihrem vorderen und hinteren Ende verschiebbar in jeder der Schienen angebracht sind, wobei die Enden mit Mitteln (7) zum Eingriff in die Klappe versehen sind,
- wobei die Klappe an Enden jeder ihrer Seitenkanten mit zwei jeweiligen Quervorsprüngen (8) versehen ist, die in Eingriff in den Mitteln aufgenommen sind.

2. System (1) nach Anspruch 1, **dadurch gekennzeichnet, dass** die Schienen (3) in der Seitenansicht eine hintere untere Plattform (10) und eine vordere obere Plattform (11) aufweisen, wobei die Plattformen durch eine in Bezug auf die Horizontale geneigte Zugangsbahn (12) getrennt sind.

3. System (1) nach einem der Ansprüche 1 oder 2, **dadurch gekennzeichnet, dass**:
- die Schienen (3) die Form eines in den Verkleidungen (2) ausgebildeten Schlitzes aufweisen,
- die Schlitten (6) auf der Rückseite der Verkleidungen angebracht sind,
- ein Eingriffsmittel (7) mittels eines in den Schlitz eingesetzten Schiebeteils (13) fest mit einem Schlitten (6) verbunden ist.

4. System (1) nach Anspruch 3, **dadurch gekennzeichnet, dass** der Schiebeteil (13) und das Eingriffsmittel (7) Teil ein und desselben einstückigen Elements sind, das am Ende des Schlittens (6) in Eingriff gebracht ist.

## Claims

1. A system (1) for covering a luggage compartment of a motor vehicle, said system comprising:
• two lateral liners (2) of said compartment, said liners each being provided with a guide rail (3),
• a fixed panel (4) for covering the front portion of said compartment, and
• a flap (5) which is slidably mounted on said rail between:
∘ a position of covering said compartment where it is disposed behind and in the extension of said panel,
∘ and a position of access to said compartment where said flap is manually displaced so as to free an access to said compartment,
• said flap in the access position being raised and moved forward so as to cover said panel by having substantially the same plate in the two positions,
said system being **characterised in that**:
• said system further comprises two rigid shuttles (6) which are slidably mounted, by the front and rear ends thereof, on each of said rails, said ends being provided with means (7) for interlocking said flap,
• said flap being provided, at the ends of each of the lateral edges thereof, with two respective transverse protrusions (8) received in interlocking in said means.

2. The system (1) according to claim 1, **characterised in that** the rails (3) in lateral view have a bottom back tray (10) and a top front tray (11), said trays being separated by an access track (12) inclined relative to the horizontal.

3. The system (1) according to one of claims 1 or 2, **characterised in that**:
• the rails (3) are in the form of a slot made in the liners (2),
• the shuttles (6) are mounted on the backside of said liners,
• an interlocking means (7) is secured to a shuttle (6) via a sliding portion (13) inserted into said slot.

4. The system (1) according to claim 3, **characterised in that** the sliding portion (13) and the interlocking means (7) are part of the same one-piece part interlocked at the end of the shuttle (6).
